# EUROPEAN PATENT SPECIFICATION

(11) **EP 1 273 458 B1**
(45) Date of publication and mention of the grant of the patent: **14.09.2005**
(21) Application number: 02078679.4
(22) Date of filing: 06.02.2000
(51) Int. Cl.: B41M 7/00, B41M 3/00, G03G 8/00, G03G 11/00, B41M 3/14, G03H 1/02, B41M 5/00, B44F 1/10, B44C 1/24

(54) **Method for producing high gloss printed images**
Verfahren zur Herstellung von bedruckten Bildern mit hohem Glanz
Procédé de production d'images imprimées très brillantes

(43) Date of publication of application: 08.01.2003
(62) Divisional of application: 00902838.2
(73) Proprietor: Hewlett-Packard Indigo B.V., 6221 SH Maastricht (NL)
(72) Inventor: Landa, Benzion, 74051 Nes Ziona (IL); Lior, Ishaiau, 76346 Rehovot (IL); Ashkenazi, Itzhak, c/o Indigo Ltd., 76101 Rehovot (IL); Scheider, Avner, 74091 Nez Ziona (IL)
(74) Representative: Leadbetter, Benedict

(56) References cited:
- WO-A-94/29035
- WO-A-97/23356
- US-A- 5 155 604
- SAXBY G: "THE BUSINESS OF EMBOSSING" BRITISH JOURNAL OF PHOTOGRAPHY,GB,HENRY GREENWOOD AND CO. LONDON, vol. 137, no. 6757, 22 February 1990 (1990-02-22), pages 20-21, XP000100045 ISSN: 0007-1196

## Description

### FIELD OF THE INVENTION

The invention relates to printing and in particular to producing printed images having a glossed finish.

### BACKGROUND OF THE INVENTION

Glossing an image printed on a substrate generally improves the perceived quality of the image. Colors in the image are brighter and better defined after glossing and generally the overall impression of the image is more appealing. Glossing is therefore frequently used in the production of printed images.

A gloss finish can be imparted to an image printed on paper by calendering. In calendering, the paper with the printed image is passed through the nip of a highly polished chrome finished roller, hereinafter referred to as a "calendering roller", and a backing roller against which the calendering roller is pressed. (The backing roller may also be a calendering roller, if for example the paper is printed on both sides.) Calendering impresses the smooth surface finish of the calendering roller onto the colorants used to print the image, smoothing the surface of the colorants and giving them a gloss.

The final gloss of a printed image may be affected by the colorants used to print the image and the finish of the paper on which the image is printed. Whereas in general the gloss improves the perceived quality of the image, in some cases glossing results in undesirable "gloss contrast" between printed regions of the image and non-printed regions of the image. For example, when an image is printed on paper with conventional powder toner, a relatively thick layer of the toner is deposited on printed regions of the paper. If the image is glossed, the gloss of the toner is increased and all regions of the paper covered with toner acquire a high, substantially uniform gloss that is relatively independent of the gloss of the paper on which the image is printed. Non-printed regions of the paper are substantially unaffected by the glossing, and, if the paper gloss is low, can contrast substantially with the printed regions of the paper and reduce the perceived quality of the image. It should be noted that in some cases the printed toner is so thick that when fixed, pressure and heat applied to the image during fixing glosses the image.

Alternatively, and more conventionally images are glossed by coating the image with lacquer or varnish or laminating it with a film. These processes are complicated and expensive.

WO-A-97 23356 describes methods for restructuring the surface of a printed substrate. In this publication an intermediate sheet is pressed against the substrate to change the surface structure of the substrate itself.

### SUMMARY OF THE INVENTION

An aspect of some preferred embodiments of the present invention relates to providing a method for producing a glossed image printed on a substrate for which printed regions of the substrate have a gloss substantially the same as, or only moderately different from, non-printed regions of the substrate.

An aspect of some preferred embodiments of the present invention relates to providing a method of calendering a printed image.

The inventors have found that toner layers preferably having a thickness of about one micrometer are suitable for practicing preferred embodiments of the present invention. A toner layer of about one micrometer replicates satisfactorily contours on surfaces of substrates having glosses that range from matte finished surfaces having roughness of 10 micrometers to high gloss finished surfaces having roughness of somewhat more than a micrometer. The thickness of the toner layer is sufficient so that for images printed on high gloss substrates, the toner layer can be smoothed by calendering so that its gloss can be made substantially equal to or moderately greater than the gloss of the substrate. Toners suitable for practicing preferred embodiments of the present invention are liquid toners manufactured by Indigo N. V., such as Electroink® III. Such images may be printed on E-Print® 1000, Turbostream® or Omnius® printers of Indigo, N.V. However, the application of some aspects of the invention is not limited to these toners or printers and is generally applicable, at least in part, to any printing process that prints a thin (compared to the roughness of normal papers) pigment polymer image.

In accordance with a preferred embodiment of the present invention, in order to provide a uniform gloss image printed on a substrate with toner, the substrate is first coated with a layer of thermoplastic. This forms a relatively smooth printing surface. The image is then printed with, preferably, a toner that forms a relatively thin toner layer on regions of the substrate on which it is printed. When the image is calendered, thermoplastic in non-printed regions of the substrate reacts to the calendering similarly to the way toner reacts to the calendering. The thermoplastic in non-printed regions of the substrate is smoothed and glossed to substantially the same extent that toner in the printed regions of the substrate is glossed.

It should be noted that using this method of providing a uniform gloss printed image does not necessarily provide the image with a gloss close to the gloss of the substrate on which it is printed. By determining the thickness of the toner layers and/or thermoplastic coating such that they are substantially thicker than the average depth of furrows at the substrate (as for example, printing with powder toner) in the substrate surface the final gloss of the image is substantially independent of the roughness and thereby the gloss of the substrate.

In accordance with a preferred embodiment of the present invention, an image printed with toner is calendered by heating the image to a temperature at which the toner becomes plastic and calendering the image using a calendering roller cooled to a temperature substantially below the softening temperature of the toner. When a region of the image passes through a nip between the calendering roller and a backing roller, the heated toner in the region is smoothed and rapidly cooled as the calendering roller absorbs heat from the toner. The rapid cooling "freezes" the smooth finish impressed on the toner by the calendering roller and prevents reflow of the toner as the region exits the nip. In addition, the cooling reduces disturbing of the surface of the toner caused by toner sticking to the surface of the calendering roller. Preferably a very smooth hard metal roller is used. Preferably, the toner is allowed to remain in contact with the calendering roller even beyond the nip, to allow the toner to further harden prior to its removal.

Optionally a hologram is produced on a printed layer of toner. In accordance with a preferred embodiment of the present invention a hologram is produced on a substrate by printing a layer of toner on the substrate and embossing the printed toner with a pattern of ridges that generates a holographic image. Embossing the toner layer is preferably performed using a method similar to a method by which a toner image is calendered in accordance with a preferred embodiment of the present invention. The pattern of ridges is etched onto a roller, hereinafter referred to as an "embossing roller". The substrate with the printed toner layer is passed through a nip between the embossing roller and a suitable backing roller. As the substrate passes through the nip, the pattern of ridges is embossed into the toner layer. Preferably, the toner is heated to a temperature at which it becomes plastic and the embossing roller is cooled to a temperature substantially below the "plastic" temperature. Typically, hologram ridges have a sub-micrometer hight. In order to assure satisfactory embossing of the hologram pattern, preferably, toner layers in the image are at least one micrometer thick. Preferably, the substrate on which the image is printed is a smooth high gloss substrate that has a roughness of about one micrometer or less. Alternatively the toner is a toner that form a layer on the substrate sufficiently thick so that during the embossing process the toner fills in furrows on the surface of the substrate.

In some preferred embodiments of the present invention the toner layer is printed so that it covers only limited regions of the substrate areas of which are intended to be embossed with a hologram ridge pattern. In some preferred embodiments of the present invention the toner layer comprises a desired image having localized regions intended for embossing with a hologram ridge pattern.

In some preferred embodiments of the present invention, to increase the reflectivity of toner that is to be embossed with a hologram ridge pattern, thin flakes of reflective material, such as for example thin metallic or mica flakes that reflect light strongly, are added to the toner. When the toner is printed and fixed to the substrate, the flakes become oriented substantially parallel to the substrate surface. When embossed with the hologram pattern, the reflectivity of the embossed toner layer is higher than it would be without the addition of the reflective material. In some preferred embodiments of the present invention the toner is dusted with a reflecting powder prior to the embossing of the pattern, to make the toner highly reflective. In some preferred embodiments of the present invention, the toner layer is made highly reflective by foil laminating the toner and covering it thereby with a highly reflective metal coating. Such a process is described in PCT patent application PCT/IL00/00018.

There is thus provided, in accordance with a preferred embodiment of the invention, a method for printing a substantially uniform gloss image on a surface of a substrate using toner comprising:
applying a layer of thermoplastic material to the substrate surface that covers substantially the entire surface of the substrate, which layer is plastic at a temperature at which the toner is plastic;
printing the image on the thermoplastic layer using the toner; and
calendering the image at an image temperature at which both the image and thermoplastic layer are plastic.

Preferably, applying a layer of thermoplastic comprises printing a layer of toner of a same type as the toner used to print the image.

### BRIEF DESCRIPTION OF FIGURES

The invention will be more clearly understood from the following description of preferred embodiments thereof read with reference to figures attached hereto. In the figures, identical structures, elements or parts that appear in more than one figure are generally labeled with a same numeral in all the figures in which they appear. Dimensions of components and features shown in the figures are chosen for convenience and clarity of presentation and are not necessarily shown to scale. The figures are listed below.
Fig. 1 schematically shows calendering an image printed on rough, matte paper in accordance with prior an and a magnified cross sectional view of a region of the image before and after calendering;
Fig. 2 shows schematically a magnified cross sectional view of a region of an image printed on paper that is coated with a thermoplastic coating so that all regions of the image have substantially a same gloss, in accordance with a preferred embodiment of the present invention; and
Figs. 3A-3C schematically show magnified cross sectional views of embossing printed images with hologram patterns, in accordance with preferred embodiments of the present invention.

### DESCRIPTION OF PREFERRED EMBODIMENTS

In the descriptions of preferred embodiments below it is assumed for convenience of presentation that substrates on which images are printed are paper. However, the practice of the invention is not limited to printing on paper and substrates other than paper can be used to print images in accordance with preferred embodiments of the present invention.

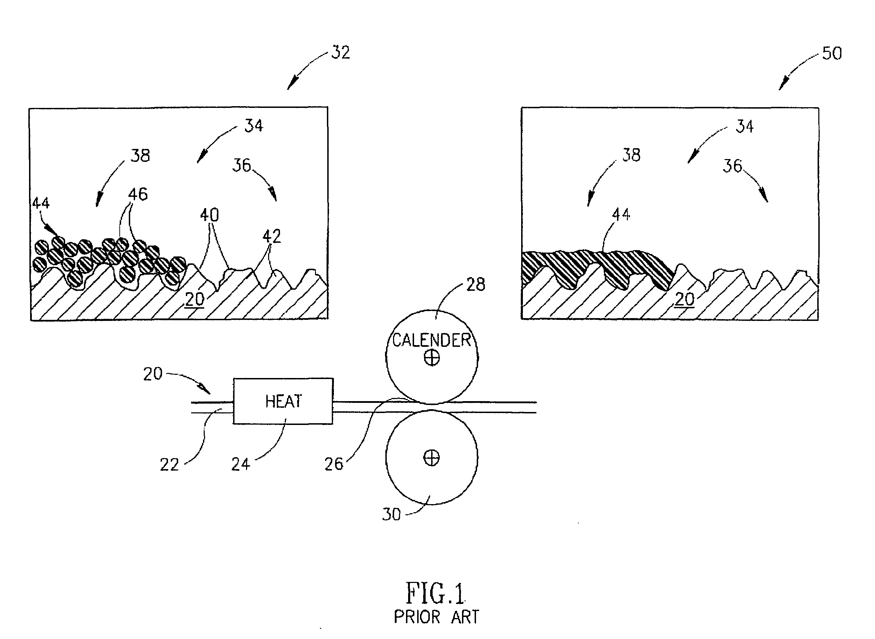

Fig. 1 schematically shows in cross-sectional view an image 20 printed on relatively rough matte finished paper 22 with conventional dry toner being glossed by calendering, in accordance with prior art. In the calendering process image 20 is heated at a hearing station, represented by a rectangle 24, using methods known in the art to a temperature at which the toner with which it is printed becomes plastic. After heating, the image passes through a nip 26 between a calendering roller 28 and a backing roller 30. Such heating may be the final fixing step of the process of printing the image.

Inset 32 shows a magnified cross sectional view of a surface area 34 of paper 22 before calendering that comprises a region 36 which is printed with a portion of image 20 and a region 38 that is not printed. Contours on surface 38 comprise peaks 40 and furrows 42 that characterize the roughness of surface 38. Peaks 40 and furrows 42 are shown as relatively pronounced, indicating the matte finish of surface area 34. The depth and width of furrows 42 range from 7 - 10 micrometers for matte finished paper.

Printed region 36 of surface 34 is covered with a layer 44 of fused dry toner particles 46 that has a thickness equal to or greater than the average depth of furrows 42. For dry toner, dimensions of toner particles range from 5 - 15 micrometers and toner layer 44 has a thickness that ranges similarly from about 6 or more micrometers to about 15 micrometers.

Inset 50 shows a cross sectional view of surface area 34 after calendering. Toner layer 44 in region 36 is substantially smoothed by the calendering and has acquired a relatively high gloss. Non-printed region 38 of surface 34 however is substantially unaffected by the calendering and has maintained it original roughness and matte finish. As a result, in surface area 34, image 20 exhibits large gloss contrast that detracts from the perceived quality of the image.

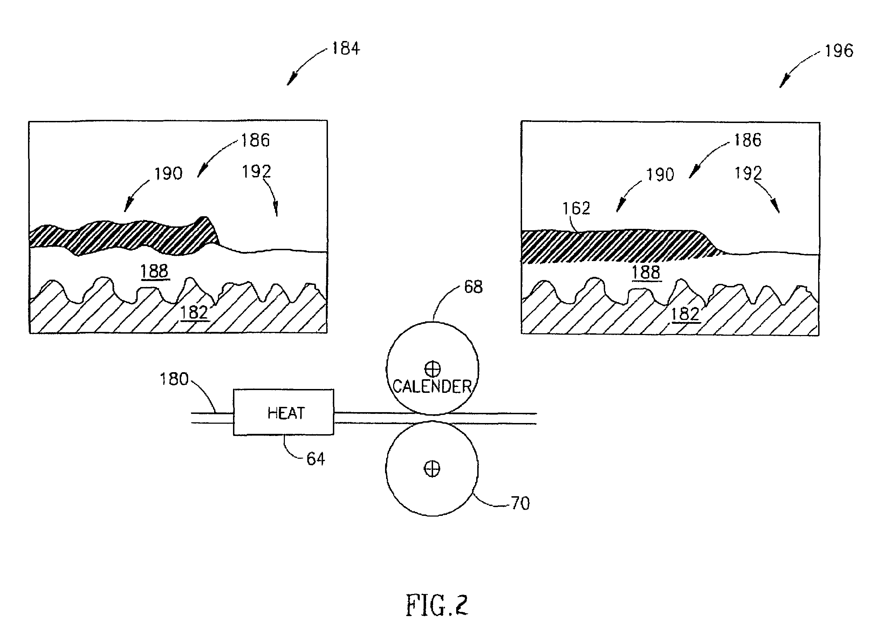

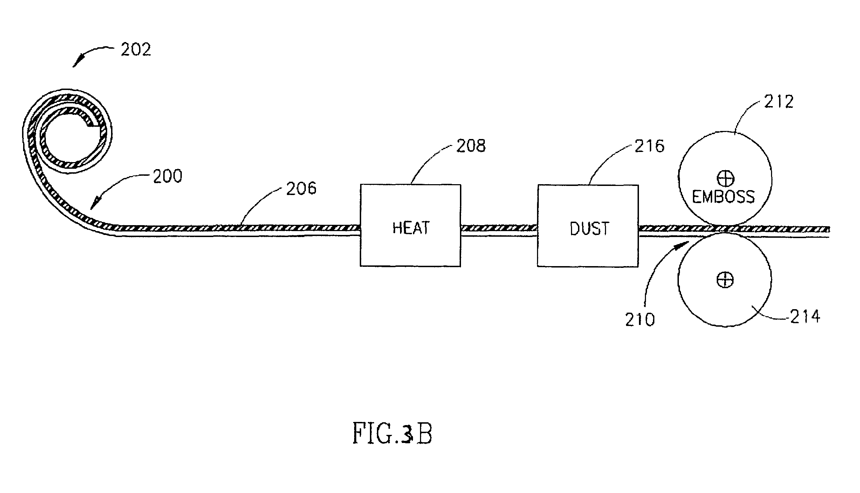

Figure 2 schematically illustrates another method, in accordance with a preferred embodiment of the present invention, for producing printed images for which printed and non-printed regions of paper on which the images are printed have a substantially same gloss. Fig. 3B schematically shows an image 180 printed on paper 182 being calendered, in which the paper is coated witha layer of preferably transparent material, which after calendering acquires a same gloss as that of colorants used to print the image. As a result image 180 after calendering has substantially uniform gloss.

An inset 184 shows a magnified cross section of a surfaceregion 185 of paper 182 prior to calendering. Paper 182 is shown by way of example as having a rough matte finish. Preferably, image 180 is printed with toner and paper 182 is covered with a layer 188 of thermoplastic material that becomes plastic at a same temperature at which the toner becomes plastic. Preferably, at the temperature at which the toner and thermoplastic become plastic, the toner and thermoplastic have substantially a same viscosity.

A region 190 of surface 186 is printed with a portion of image 180 and a region 192 of surface 186 is not printed. Printed region 190 is covered with a layer 194 of fused toner used to print image 180. Preferably toner layer 194 is relatively thin. Preferably the toner used to print image 180 is Electroink II or Electroink III. Preferably, thermoplastic layer 188 comprises the same polymer as used for the toner particles. It may be applied, for example, by preprinting a continuous layer of preferably transparent toner of the same type as that used to produce the colored pan of the image. An inset 196 shows surface area 186 after calendering. Both printed region 190 and non-printed region 192 of surface 186 are smoothed by the calendering to substantially a same degree and have acquired a substantially same gloss.

In the calendering process, image 60 is heated at a heating station 64 to a temperature at which the toner with which it is printed becomes plastic using methods known in the art. The heated image passes through a nip 66 between a calendering roller 68 and a backing roller 70.

Calendering roller 68 is initially at a temperature that is preferably substantially less than the temperature at which the toner becomes plastic. As a region of image 60 passes through nip 66, calendering roller 68 absorbs heat from the toner in the region and the toner cools rapidly to a temperature preferably below the temperature at which it is plastic while still in contact with calendering roller 68. As a result, toner reflow and dimpling of the toner surface resulting from localized adhesion of toner to calendering roller 68 are substantially reduced.

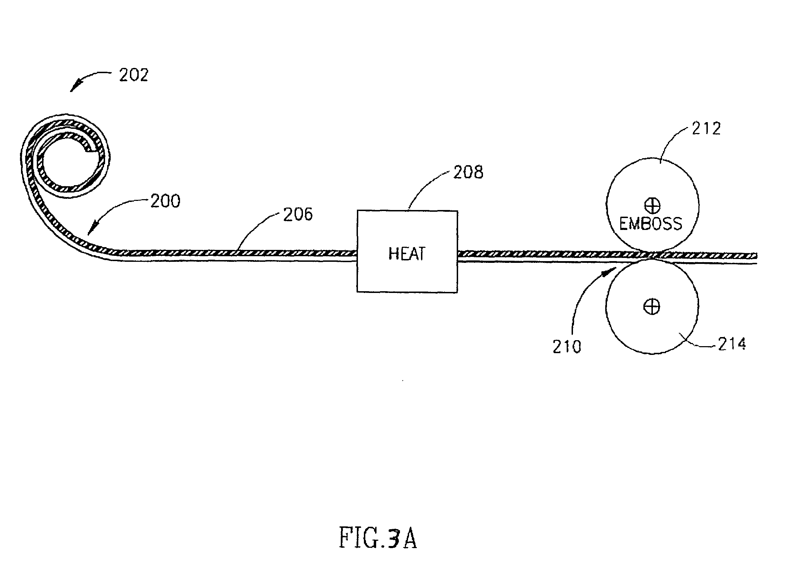

Fig. 3A schematically shows producing holograms by embossing toner printed on paper in accordance with a preferred embodiment of the present invention. In Fig. 3A a paper web 200 printed with a layer of toner, in accordance with a preferred embodiment of the present invention, is fed from a roll 202 to a heating station 208 at which toner layer 206 is heated so that it is plastic. Web 200 then passes through a nip 210 between an embossing roller 212 and a backing roller 214. Embossing roller 212 is etched with a hologram ridge pattern using methods known in the art. When a region of web 200 passes through nip 210, toner layer 206 is embossed with the hologram ridge pattern. Preferably toner layer 206 comprises thin flakes of reflective material such for example mica or a suitable metal that increase the reflectivity of toner layer 206. To improve fidelity with which the embossing pattern is embossed on toner layer 206, preferably embossing roller 212 is cooled to a temperature substantially less than a temperature at which toner layer 206 becomes plastic.

Fig. 3B shows a variation of the method shown in Fig. 4A. In Fig. 4B after being heated at heating station 208 web 200 passes through a dusting station 216. At dusting station 216, toner layer 206 is covered with a dust of reflective material, such for example as a metal dust, using methods known in the art, which increases substantially the reflectivity of toner layer 206. In the method shown in Fig. 4B toner used to produce toner layer 206 may or may not comprises reflective flakes.

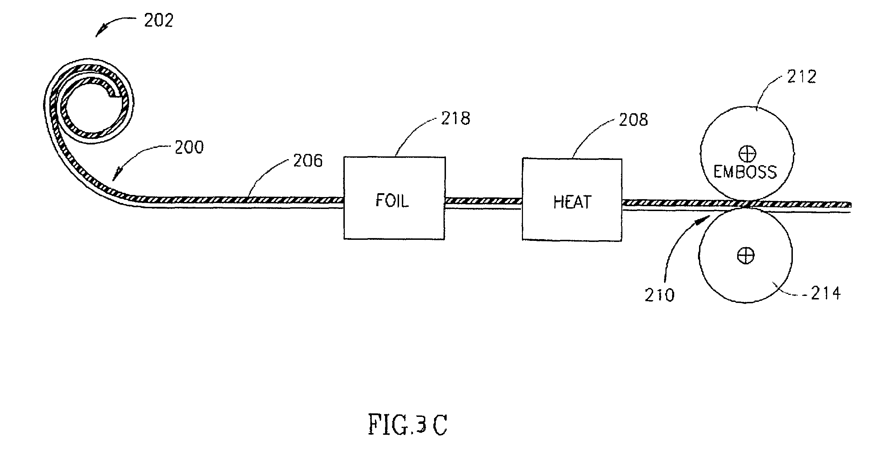

Fig. 3C shows another variation of the method of producing holograms on printed toner, in accordance with a preferred embodiment of the present invention. In Fig. 4C, web 200 passes through a foil printing station 218 at which station toner layer 206 is foil printed using methods known in the art, with a reflective metal foil. Web 200 then passes to heating station 208 where it is heated to a temperature at which foiled toner layer 206 becomes plastic and then continues on to pass through nip 212 where toner layer 206 is embossed Preferably, toner layer is foiled using processes and material described in PCT Application PCT/IL00/00018 entitled "Foil Printing." Using methods described in the application it is possible to foil either all of toner layer 206 or only desired regions of toner layer 206. After foiling, web 200 undergoes a hologram embossing process in which only areas of the foiled wings are embossed.

It should be noted that, in accordance with a preferred embodiment of the present invention, the substrate may include both image portions and holographic portions (either foiled or unfoiled). In either case, the images have localized regions that are to be embossed with a hologram ridge pattern. Embossing roller 212 has an appropriate region of its surface etched with an embossing pattern. Rotation of embossing roller 212 is synchronized with the rate of advance of web 200 and registered to the images printed on web 200 so that only the localized regions of the images that are intended to have the hologram are properly embossed with the hologram ridge pattern. Whereas in Figs. 3A - 3C a paper web is shown being embossed with a hologram, in some preferred embodiments of the present invention, sheets of paper printed with a toner layer or suitable toner image are embossed with a hologram ridge pattern.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

The present invention has been described using detailed descriptions of preferred embodiments thereof that are provided by way of example and are not intended to limit the scope of the invention. The described preferred embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A method for printing substantially uniform gloss image on a surface of a substrate (182) using toner comprising:
applying a layer of thermoplastic material (188) to the substrate surface that covers the entire surface of the substrate, which layer is plastic at a temperature at which the toner is plastic;
printing the image on the thermoplastic layer using the toner; and
calendering the image at an image temperature at which both the image and thermoplastic layer are plastic.

2. A method according to claim 1 wherein applying a layer of thermoplastic comprises printing a layer of toner of a same type as the toner used to print the image.

3. A method according to claim 1 or claim 2 wherein calendering comprises;
first heating the image to a temperature at which the thermoplastic material softens; and
then passing the substrate through a nip formed by a smooth hard roller (68) and another surface (70).

4. A method according to claim 3 wherein the smooth hard roller and the other surface are at a temperature at which the image and substrate are not plastic.

5. A method according to claim 4 and including:
continuing contact between the material to the roller after the substrate leaves the nip to allow the material to cool.

6. A method according to any of claims 3-5 wherein the material is cooled to a temperature at which it is not plastic prior to its removal from contact with the smooth hard roller.

7. A method according to claim 1 or claim 2 wherein calandering comprises:
passing the substrate through a nip formed by a smooth hard roller 68, heated to a temperature at which the substrate softens, and another surface.

8. A method according to any of claims 3-7 wherein the another surface is the surface of a hard roller (70).

9. A method according to any of the preceding claims wherein the image is a liquid toner image.

10. A method according to claim 7 wherein the image is substantially free of carrier liquid during said calandering.

11. A method according to any of claims 1-10 wherein, at a temperature at which the layer and the image become plastic they have the substantially a same temperature.

12. A method according to any of the preceding claims wherein the surface of the substrate is not substantially affected by the calendaring.

13. A method according to any of the preceding claims, in which said image contacts a surface of a calendaring roller (68) during said calendaring.

14. A method according to any of the preceding claims and including forming a hologram in said thermoplastic layer, wherein the thermoplastic layer is a printed layer.

## Patentansprüche

1. Ein Verfahren zum Drucken eines im Wesentlichen einheitlichen Glanzbilds auf einer Oberfläche eines Substrats (182) unter Verwendung von Toner, das folgende Schritte aufweist:
Aufbringen einer Schicht eines thermoplastischen Materials (188) auf die Substratoberfläche, die im Wesentlichen die gesamte Oberfläche des Substrats bedeckt, wobei die Schicht bei einer Temperatur plastisch ist, bei der der Toner plastisch ist;
Drucken des Bilds auf der thermoplastischen Schicht unter Verwendung des Toners; und
Kalandrieren des Bilds bei einer Bildtemperatur, bei der sowohl das Bild als auch die thermoplastische Schicht plastisch sind.

2. Ein Verfahren gemäß Anspruch 1, bei dem das Aufbringen einer Schicht von Thermoplast ein Drucken einer Schicht von Toner eines gleichen Typs wie der Toner aufweist, der verwendet wird, um das Bild zu drucken.

3. Ein Verfahren gemäß Anspruch 1 oder 2, bei dem das Kalandrieren folgende Schritte aufweist:
erstens ein Erwärmen des Bilds auf eine Temperatur, bei der das thermoplastische Material weich wird; und
dann Leiten des Substrats durch eine Einklemmstelle, die durch eine glatte harte Rolle (68) und eine andere Oberfläche (70) gebildet wird.

4. Ein Verfahren gemäß Anspruch 3, bei dem die glatte harte Rolle und die andere Oberfläche sich bei einer Temperatur befinden, bei der das Bild und das Substrat nicht plastisch sind.

5. Ein Verfahren gemäß Anspruch 4, das folgenden Schritt umfasst:
Fortführen eines Kontakts zwischen dem Material und der Rolle, nachdem das Substrat die Einklemmstelle verlässt, um zu ermöglichen, dass sich das Material abkühlt.

6. Ein Verfahren gemäß einem der Ansprüche 3 bis 5, bei dem das Material vor einer Entfernung desselben aus einem Kontakt mit der glatten harten Rolle auf eine Temperatur gekühlt wird, bei der dasselbe nicht plastisch ist.

7. Ein Verfahren gemäß Anspruch 1 oder Anspruch 2, bei dem das Kalandrieren folgenden Schritt aufweist:
Leiten des Substrats durch eine Einklemmstelle, die durch eine glatte harte Rolle (68), die auf eine Temperatur erwärmt ist, bei der das Substrat weich wird, und eine andere Oberfläche gebildet ist.

8. Ein Verfahren gemäß einem der Ansprüche 3 bis 7, bei dem die andere Oberfläche die Oberfläche einer harten Rolle (70) ist.

9. Ein Verfahren gemäß einem der vorhergehenden Ansprüche, bei dem das Bild ein Flüssigtonerbild ist.

10. Ein Verfahren gemäß Anspruch 7, bei dem das Bild während des Kalandrierens im Wesentlichen frei von einer Trägerflüssigkeit ist.

11. Ein Verfahren gemäß einem der Ansprüche 1 bis 10, bei dem bei einer Temperatur, bei der die Schicht und das Bild plastisch werden, dieselben im Wesentlichen die gleiche Temperatur aufweisen.

12. Ein Verfahren gemäß einem der vorhergehenden Ansprüche, bei dem die Oberfläche des Substrats durch das Kalandrieren nicht wesentlich beeinflusst wird.

13. Ein Verfahren gemäß einem der vorhergehenden Ansprüche, bei dem das Bild während des Kalandrierens eine Oberfläche einer Kalandrierrolle (68) berührt.

14. Ein Verfahren gemäß einem der vorhergehenden Ansprüche, das ein Bilden eines Hologramms in der thermoplastischen Schicht umfasst, wobei die thermoplastische Schicht eine gedruckte Schicht ist.

## Revendications

1. Procédé pour imprimer une image brillante essentiellement uniforme sur une surface d'un substrat (182) utilisant un toner comprenant les étapes consistant à :
**S** appliquer une couche d'une matière thermoplastique (188) à la surface de substrat qui recouvre essentiellement toute la surface de substrat, laquelle couche est plastique à une température à laquelle le toner est plastique ;
**S** imprimer l'image sur la couche thermoplastique utilisant le toner ; et
**S** calandrer l'image à une température d'image à laquelle à la fois l'image et la couche thermoplastique sont plastiques.

2. Procédé selon la revendication 1, dans lequel l'application d'une couche thermoplastique comprend le fait d'imprimer une couche de toner d'un même type que le toner utilisé pour imprimer l'image.

3. Procédé selon la revendication 1 ou la revendication 2, dans lequel le calandrage comprend les étapes consistant à :
**S** d'abord chauffer l'image à une température à laquelle la matière thermoplastique se ramollit ; et
**S** ensuite passer le substrat à travers une ligne de contact formée par un rouleau dur, lisse (68) et une autre surface (70).

4. Procédé selon la revendication 3, dans lequel le rouleau dur, lisse et l'autre surface sont à une température à laquelle l'image et le substrat ne sont pas plastiques.

5. Procédé selon la revendication 4 et incluant l'étape consistant à :
**S** continuer le contact entre la matière et le rouleau après que le substrat quitte la ligne de contact pour permettre à la matière de se refroidir.

6. Procédé selon n'importe laquelle des revendications 3 à 5, dans lequel la matière est refroidie à une température à laquelle elle n'est pas plastique avant son enlèvement du contact avec le rouleau dur, lisse.

7. Procédé selon la revendication 1 ou la revendication 2, dans lequel le calandrage comprend l'étape consistant à :
**S** passer le substrat à travers une ligne de contact formée par un rouleau dur, lisse (68) chauffé à une température à laquelle le substrat se ramollit, et une autre surface.

8. Procédé selon n'importe laquelle des revendications 3 à 7, dans lequel l'autre surface est la surface d'un rouleau dur (70).

9. Procédé selon n'importe laquelle des revendications précédentes, dans lequel l'image est une image avec un toner liquide.

10. Procédé selon la revendication 7, dans lequel l'image est essentiellement en grande partie sans liquide de support pendant ledit calandrage.

11. Procédé selon n'importe laquelle des revendications 1 à 10, dans lequel, à une température à laquelle la couche et l'image deviennent plastiques, elles ont sensiblement une même température.

12. Procédé selon n'importe laquelle des revendications précédentes, dans lequel la surface du substrat n'est sensiblement pas affectée par le calandrage.

13. Procédé selon n'importe laquelle des revendications précédentes, dans lequel ladite image contacte une surface d'un rouleau de calandrage (68) pendant ledit calandrage.

14. Procédé selon n'importe laquelle des revendications précédentes et incluant le fait de former un hologramme sur ladite couche thermoplastique, dans lequel la couche thermoplastique est une couche imprimée.
